# EUROPEAN PATENT APPLICATION

(11) **EP 1 693 164 A1**
(43) Date of publication of application: **23.08.2006**
(21) Application number: 06003304.0
(22) Date of filing: 17.02.2006
(51) Int. Cl.: B25J 9/16, B25J 19/02

(54) **Robot imaging device comprising a camera mounted on a movable positioning structure**

(30) Priority: 21.02.2005 JP 2005043959
(71) Applicant: FANUC LTD, Minamitsuru-gun, Yamanashi 401-0597 (JP)
(72) Inventor: Takeda, Toshiya, Minamitsuru-gun, Yamanashi 401-0511 (JP); Kobayashi, Hirohiko, Fujiyoshida-shi, Yamanashi 403-0004 (JP)
(74) Representative: Thum, Bernhard

(57) **Abstract**

A robot imaging device (10) for monitoring the operation of a robot (1), by which the workload for organizing images may be reduced by imaging the operation of the robot (1) without excess or deficiency, and whereby the total cost of the device (10) may be reduced. The robot imaging device (10) includes a camera (12) for monitoring an operation of a robot (1), a camera positioning structure (14) for movably supporting the camera (12), and a camera positioning structure control device (16) for controlling the camera positioning structure (14). When a robot control device (2) sends a command to the camera positioning structure control device (16), the camera positioning structure control device (16) may control the camera positioning structure (14), based on the command, such that an imaging area of the camera (12) is changed from one operation site (A) to another operation site (B).

## Description

### BACKGROUND OF THE INVENTION

### 1. Field of the Invention

The present invention relates to a robot imaging device for monitoring a condition of an operation of a robot, by means of a camera or the like.

### 2. Description of the Related Art

In the prior art, when an operation of a robot operated at a plurality of positions is to be monitored, a plurality of cameras are arranged at the respective positions to image the operation of the robot. In Japanese Unexamined Patent Publication No. 6-285786, a method and a device for adjusting the position of a camera are disclosed. By the method or the device, as one camera is remotely controlled to move on a circular rail, the relative positional relation between the camera and the robot may be constantly maintained.

In the prior art, one camera is positioned at each operation site. Therefore, a large number of cameras may be necessary, whereby the cost of a total system is increased. In order to understand a total flow of the operation, images obtained by the cameras must be organized, whereby the system is complicated and the organization requires a considerable amount of work. Further, each camera also images the robot when the robot is not operated and, therefore, unnecessary images are recorded, which may deteriorate the usability and the maintenance of the system.

The method or the device disclosed in Japanese Unexamined Patent Publication No. 6-285786 is configured to facilitate the remote control of the system by consistently positioning the image of a robot arm in the same orientation on a display even when the orientation of the robot is actually changed (for example, when the robot is rotated by 180 degrees, the image of the robot arm on the display is not symmetrically changed). Therefore, the method or device is not intended to reduce the cost and workload of the system for managing the whole operation in which the robot is operated in a plurality of sites.

### SUMMARY OF THE INVENTION

Accordingly, an object of the present invention is to provide an inexpensive robot imaging device for monitoring the operation of a robot, by which the workload for organizing images may be reduced by imaging the operation of the robot without excess or deficiency.

To this end, according to the present invention, there is provided a robot imaging device comprising: a camera for monitoring an operation of a robot configured to be operated at a plurality of operation sites; a camera positioning structure for movably supporting the camera such that at least one of the position and the orientation of the camera may be changed; and a camera positioning structure control device for controlling the camera positioning structure, wherein the camera positioning structure control device controls the camera positioning structure based on a command from a robot control device for controlling the robot, and changes at least one of the position and the orientation of the camera such that the camera may image the robot being operated at each of the plurality of operation sites.

Preferably, the command fed to the camera positioning structure control device from the robot control device is generated when the robot control device executes a particular command included in an operation program to be performed by the robot.

Further, the camera positioning structure control device may have a memory for storing a set of data of a representative position of each of the operation sites and the position of the camera where the camera images the representative position. In this case, the camera positioning structure may be controlled so as to move the camera to the position corresponding to the representative position when the particular command in the program is executed.

On the other hand, the camera positioning structure control device may have a memory for storing a positional relation between a representative point of the robot and the position of the camera. In this case, the camera positioning structure may be controlled so as to move the camera to the position where the camera may image the operation s-ite of the robot, based on the positional relation and the representative point of the robot.

In addition, the device may have a plurality of cameras and a plurality of camera positioning structures for movably supporting the cameras. In this case, the command, fed to the camera positioning structure control device from the robot control device, includes a command for selecting one of the plurality of cameras as the camera for imaging the robot.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 is a block diagram indicating a basic configuration of a robot imaging device of the invention;
Fig. 2a is a diagram indicating a schematic configuration of a preferred embodiment of the robot imaging device;
Fig. 2b is a diagram, similar to Fig. 2a, indicating a schematic configuration of a robot imaging device including a plurality of cameras and a plurality of camera positioning structures;
Fig. 3 is a flowchart indicating a first method for changing the imaging position of the camera; and
Fig. 4 is a flowchart indicating a second method for changing the imaging position of the camera.

### DETAILED DESCRIPTION

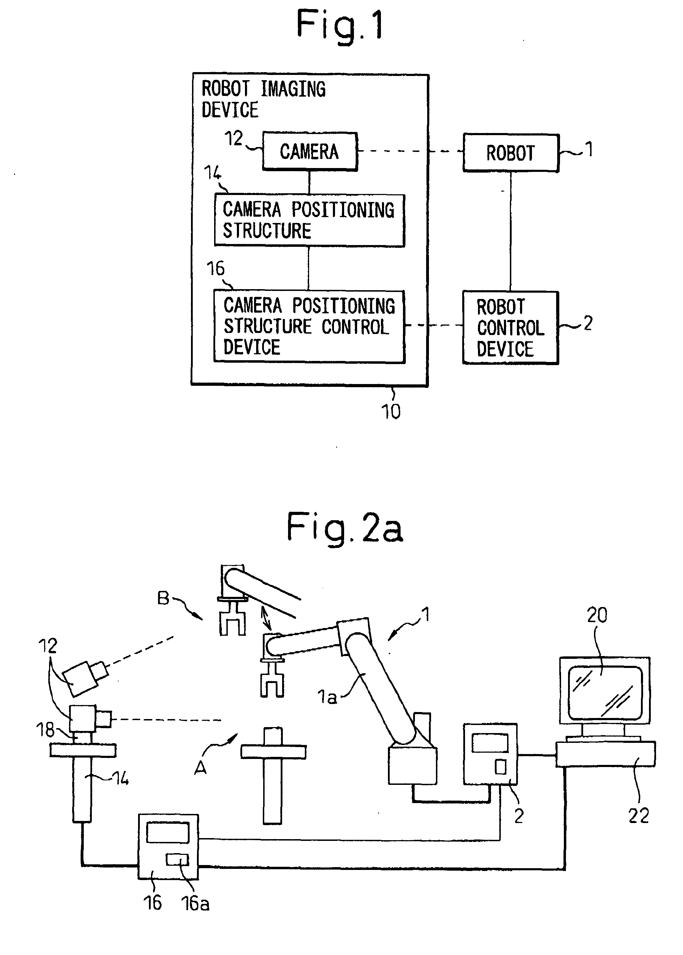

Hereinafter, the present invention is described with reference to the drawings. Fig. 1 is a block diagram indicating a basic configuration of a robot imaging device 10 of the invention. The robot imaging device 10 includes a camera 12 for monitoring an operation of a robot 1 having a manipulator 1a (see Fig. 2a) configured to be operated at a plurality of operation sites, a camera positioning structure 14 for movably supporting the camera 12 such that at least one of the position and the orientation of the camera 12 may be changed, and a camera positioning structure control device 16 for controlling the camera positioning structure 14. The camera positioning structure control device 16 may control the camera positioning structure 14 based on a command from a robot control device 2 for controlling the robot 1, and changes at least one of the position and the orientation of the camera 12 such that the camera 12 may image the robot 1 being operated at each of the plurality of operation sites.

Fig. 2a shows a schematic configuration of a preferred embodiment of the robot imaging device 10. The robot 10 is configured to be operated at at least two operation sites or areas A and B. The robot imaging device 10 includes the camera 12 for monitoring an operation of the robot 1, the camera positioning structure 14 for movably supporting the camera 12, and the camera positioning structure control device 16 for controlling the camera positioning structure 14. The camera positioning structure 14 has a driving shaft 18 for pivotally supporting the camera 12. The camera positioning structure 14 may have one or more driving shafts, depending on various motions of the camera such as the movement or the rotation. In this specification, the term "positioning" or "change of position" includes the change of at lease one of the position and the orientation of the camera. The camera positioning structure control device 16 may change an imaging area of the camera 12 from the operation area A to the operation area B (or vice versa), by controlling the motion of the driving shaft 18 of the camera positioning structure 14 based on the command from the robot control device 2. The imaging device 10 also includes an image processor 22 with a display 20 for indicating an image obtained by the camera 12. The image processor 22 and the camera positioning structure control device 16 may be incorporated into the same apparatus such as a personal computer. The image processor 22 may have a memory device such as a hard disk for storing the image.

As shown in Fig. 2a, the robot imaging device 10 and the robot control device 2 are connected each other via a network. However, they may be incorporated into the common apparatus. In addition, an additional shaft (not shown) controlled by the robot 1 may be used as the positioning structure 14 for the camera 12.

Next, two methods for changing the imaging position are described.

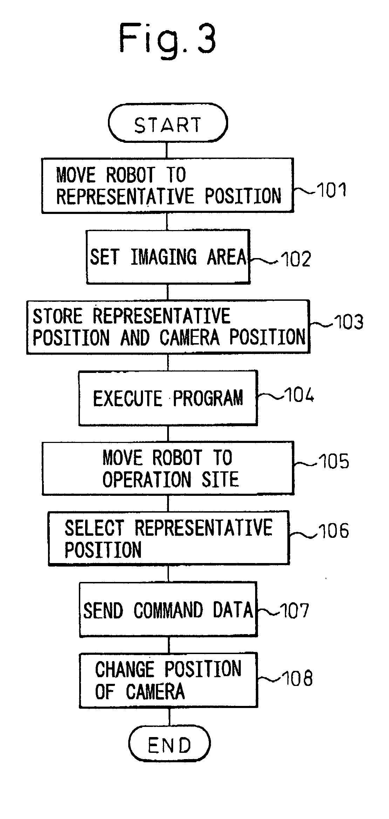

Fig. 3 shows a flowchart indicating a first method for changing the imaging position of the camera by the command from the robot. First, the robot 1 is moved to each operation site or a representative position representing the operation site (step S101). It should be understood that the camera, positioned at the imaging position where the camera may image the robot at the representative position, may also effectively image each operation site. Then, an operator moves the camera 12 so as to determine the imaging area, while monitoring the display 20 of the image processor 22, such that the camera 12 may suitably image each operation site as an object to be imaged (step S102). At this point, each operation site or the representative position and corresponding the imaging position of camera are combined and stored in a memory 16a of the camera positioning structure control device 16 (step S103). An example of stored data is shown in Table 1. In the example, four representative positions and corresponding imaging positions are included. As shown in Table 1, the representative position is preferably used, whereby each coordinate may be simplified (i.e., X and Z-coordinates are zero and only Y-coordinate is varied). In the example of Table 1, the camera may alternately image each object area to be imaged, corresponding to each operation site, only by changing the angle of the camera.

**Table 1**

| Representative Position of Robot (mm) | | | Position of Camera (degree) |
|---|---|---|---|
| X-coordinate | Y-coordinate | Z-coordinate | |
| 0 | 0 | 0 | 0 |
| 0 | 1000 | 0 | 45 |
| 0 | -500 | 0 | -30 |
| 0 | -1500 | 0 | -60 |

As the camera 12, a WEB camera may be used, by which the image obtained by the WEB camera may be viewed via Internet. In this case, a Computer Graphic Interface (CGI) for controlling the WEB camera is used to alternate the object area to be imaged and, then, a command for controlling CGI is prepared instead of the position (or the angle in the example of Table 1) of the camera.

Next, a previously provided robot program is executed to activate the robot 1 (step S104). As shown below, this robot program includes, in addition to a statement for moving the robot, a specific statement (from line 2 to line 7) for changing the position of the camera such that the camera may image each object area stored in step S103, corresponding to each representative position of each operation site. In an example program 1 below, after the robot 1 is moved to the position P[1] or P[5], the position of the camera 12 is changed to the camera position CP[1] or CP[5] corresponding to the position P[1] or P[5], respectively, so as to image the robot. Further, when the robot 1 is positioned at the position other than P[1] and P[5] (i.e., one of the positions P[2] to P[4] and P[6] and P[8]), the imaging motion of the camera 12 is stopped or suspended so as to avoid taking an unnecessary image.

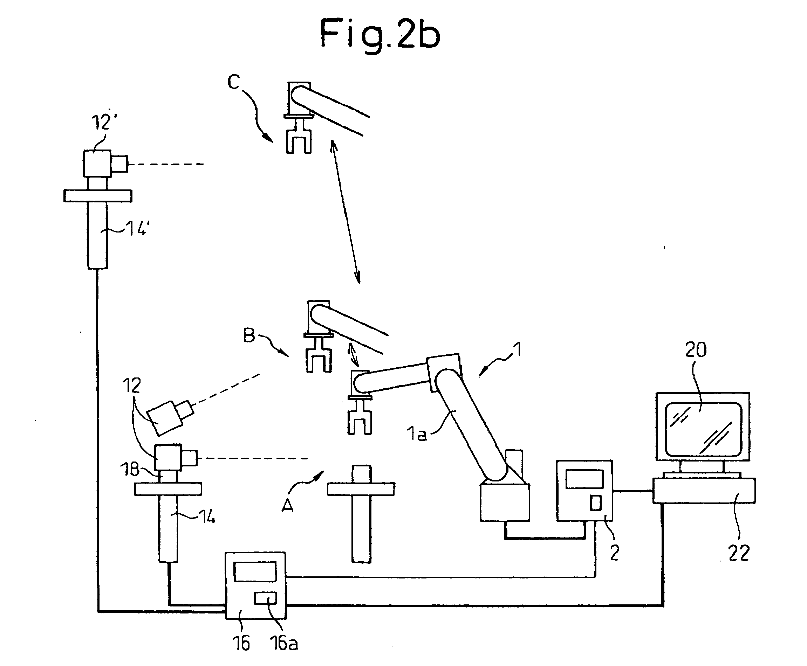

In addition, as shown in Fig. 2b, when it is difficult to image all operation sites using one camera (for example, another operation site C of the robot 1 is considerably away from the operation sites A and B), another camera 12' for imaging and another camera positioning structure 14' therefor may be arranged. In this case, each of the statements in lines 2 and 7 of the program may further include a program argument indicating which camera should be used.

### Example Program 1

1: MOVE L P[1]
   move robot to P[1] by straight pass control
2: CHANGE IMAGING POSITION CP[1]
   change position of camera to position CP[1]
3: MOVE L P[2]
   move robot to P[2] by straight pass control
4: MOVE L P[3]
   move robot to P[3] by straight pass control
5: MOVE L P[4]
   move robot to P[4] by straight pass control
6: MOVE J P[5]
   move robot to P[5] by motion of each axis
7: CHANGE IMAGING POSITION CP[5]
   change position of camera to position CP[5]
8: MOVE L P[6]
   move robot to P[6] by straight pass control
9: MOVE L P[7]
   move robot to P[7] by straight pass control
10: MOVE L P[8]
   move robot to P[8] by straight pass control

By executing the above robot program, the robot 1 is moved to the directed operation site (step S105). Then, the robot control device 2 selects a representative position (see step S101) which is closest to the current position of the robot 1 (step S106). Next, the robot control device 2 sends command data to the camera positioning structure control device 16 such that the camera 12 images the object to be imaged which is stored corresponding to the representative position (step S107). The camera positioning structure control device 16 controls the camera positioning structure 14 to change the position of the camera 12 to the imaging position according to the command by the robot control device 2 (step 5108).

In the above first method, a statement in relation to the change of imaging position of the camera is included in the robot program. However, in a second method as explained below, the positional relation between the robot and the camera is previously set and the imaging position of the camera is changed based on the positional information of a representative position of a movable part of the robot (for example, a TCP (Tool Center Point)). The positional information may be sequentially fed from the robot control device 2.

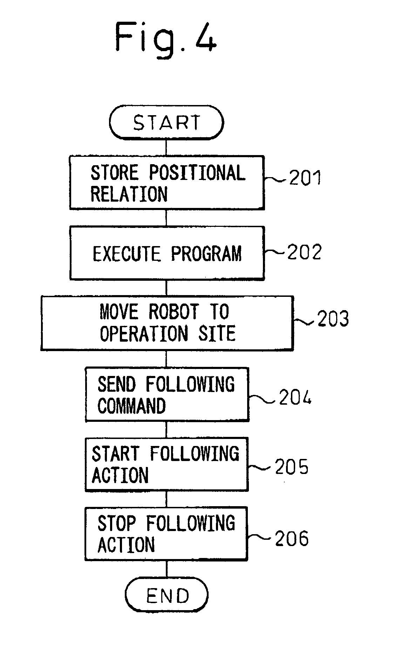

In the second method as shown in Fig. 4, the imaging position of the camera is changed by following the TCP of the robot using the camera. First, the positional relation between the TCP of the robot 1 and the camera 12 is determined by means of a suitable measurement means or a sensor (not shown). In general, the position of the TCP is represented on a robot-base coordinate system of the robot. Therefore, the camera positioning structure control device 16 converts the position of the TCP into the position represented on a camera-base coordinate system, based on the position on the robot-base coordinate system and the above positional relation. The positional information of the TCP and the positional relation between the robot and the camera are stored in the memory 16a of the camera positioning structure control device 16 (step S201). Next, a previously provided robot program is executed to activate the robot, 1 (step S202). As shown below, this robot program includes, in addition to a statement for moving the robot, a specific statement (from line 2 to line 7) for following the motion of the robot 1, based on the positional relation between the robot 1 and the camera 12 stored in step S201. In this specification, the term "following" means changing the position and/or the orientation of the camera 12 such that the camera may effectively image the operation of the robot 1 even after the robot is moved to another position. Therefore, the term does not necessarily mean moving the camera 12 to synchronize the camera with the motion of the robot 1.

In an example program 2 as shown below, it is assumed that the robot 1 must be monitored or imaged by the camera 12 while the robot is moved from the position P[1] to P[5]. In other words, the camera 12 begins to image the robot just after the robot 1 reaches the position P[1] and continues to follow the motion of the robot until the robot reaches to the position P[5]. Depending on the positional information such as the distance between each operation site, a plurality of cameras capable of following the motion of the robot and a plurality of positioning structures therefor may be arranged. In this case, each of the statements in lines 2 and 7 of the program may include a program argument indicating which camera should be used.

### Example Program 2

1: MOVE L P[1]
   move robot to P[1] by straight pass control
2: START FOLLOWING BY CAMERA
   start following TCP using camera
3: MOVE L P[2]
   move robot to P[2] by straight pass control
4: MOVE L P[3]
   move robot to P[3] by straight pass control
5: MOVE L P[4]
   move robot to P[4] by straight pass control
6: MOVE J P[5]
   move robot to P[5] by motion of each axis
7: END FOLLOWING BY CAMERA
   stop following TCP by camera
8: MOVE L P[6]
   move robot to P[6] by straight pass control
9: MOVE L P[7]
   move robot to P[7] by straight pass control
10: MOVE L P[8]
   move robot to P[8] by straight pass control

By executing the above robot program, the robot 1 is moved to the directed operation site (step S203). Next, the robot control device 2 sends a command to the camera positioning structure control device 16 such that the camera 12 follows the TCP of the robot 1 (step S204). The camera positioning structure control device 16 then controls the camera positioning structure 14 to begin the following action of the camera 12 (step S205). During the following action, the current position data of the TCP of the robot 1 may be periodically sent to the camera positioning structure control device 16 via the robot control device 2. Therefore, the camera positioning structure control device 16 may control the following action, in real time, based on the current position data and the positional relation between the robot 1 and the camera 12. The camera 12 thus always suitably images the operation of the robot 1. When the statement for stopping the following action (e.g., the 7-th line in the program) is read, the robot control device 2 sends a command to the camera positioning structure control device 16 so as to stop the following action (step S206). After stopping the following action, the camera 12 does not image the robot any more to avoid taking an unnecessary image.

According to the robot imaging device of the invention, the number of cameras may be minimized and the cost of a whole device may be reduced. By reducing the number of the cameras, the workload for organizing the obtained images may be also reduced. Further, as the images may be obtained by command from the robot control device, an unnecessary image is not obtained and the capacity of a memory media such as a hard disk for storing the images may be reduced.

While the invention has been described with reference to specific embodiments chosen for the purpose of illustration, it should be apparent that numerous modifications could be made thereto, by one skilled in the art, without departing from the basic concept and scope of the invention.

## Claims

1. A robot imaging device (10) comprising:
a camera (12) for monitoring an operation of a robot (1) configured to be operated at a plurality of operation sites (A, B);
a camera positioning structure (14) for movably supporting the camera (12) such that at least one of the position and the orientation of the camera (12) may be changed; and
a camera positioning structure control device (16) for controlling the camera positioning structure (14),
**characterized in that** the camera positioning structure control device (16) controls the camera positioning structure (14) based on a command from a robot control device (2) for controlling the robot (1), and changes at least one of the position and the orientation of the camera (12) such that the camera (12) may image the robot (1) being operated at each of the plurality of operation sites (A, B).

2. The robot imaging device as set forth in claim 1, wherein the command fed to the camera positioning structure control device (16) from the robot control device (2) is generated when the robot control device (2) executes a particular command included in an operation program to be performed by the robot (1).

3. The robot imaging device as set forth in claim 2, wherein the camera positioning structure control device (16) has a memory (16a) for storing a set of data of a representative position of each of the operation sites (A, B) and the position of the camera (12) where the camera (12) images the representative position, whereby the camera positioning structure (14) may be controlled so as to move the camera (12) to the position corresponding to the representative position when the particular command in the program is executed.

4. The robot imaging device as set forth in claim 1, wherein the camera positioning structure control device (16) has a memory (16a) for storing a positional relation between a representative point of the robot (1) and the position of the camera (12), whereby the camera positioning structure (14) may be controlled so as to move the camera (12) to the position where the camera (12) may image the operation site of the robot (1), based on the positional relation and the representative point of the robot (1).

5. The robot imaging device as set forth in any one of preceding claims, wherein the device (10) has a plurality of cameras (12, 12') and a plurality of camera positioning structures (14, 14') for movably supporting the cameras (12, 12'), and the command fed to the camera positioning structure control device (16) from the robot control device (2) includes a command for selecting one of the plurality of cameras (12, 12') as the camera for imaging the robot (1).
